# EUROPÄISCHE PATENTSCHRIFT

(11) **EP 4 106 263 B1**
(45) Veröffentlichungstag und Bekanntmachung des Hinweises auf die Patenterteilung: **15.10.2025**
(21) Anmeldenummer: 21179295.7
(22) Anmeldetag: 14.06.2021
(51) Int. Cl.: H04L 9/08

(54) **VERFAHREN UND SYSTEM ZUR PLANUNG EINES QUANTENOPTISCHEN NETZWERKS**
METHOD AND SYSTEM FOR PLANNING A QUANTUM OPTICAL NETWORK
PROCÉDÉ ET SYSTÈME DE PLANIFICATION D'UN RÉSEAU OPTIQUES À GUIDE D'ONDE

(43) Veröffentlichungstag der Anmeldung: 21.12.2022
(73) Patentinhaber: Deutsche Telekom AG, 53113 Bonn (DE); Ludwig-Maximilians-Universität München, 80539 München (DE)
(72) Erfinder: GEITZ, Marc, 58089 Hagen (DE); GUNKEL, Matthias, 64291 Darmstadt (DE); FÜRST, Volker, 64297 Darmstadt (DE); HOFMANN, Fred, 56244 Freirachdorf (DE); LEHMANN, Bettina, 14612 Falkensee (DE); ROCH, Christoph, 80798 München (DE); STEIN, Jonas, 81543 München (DE); GODAR, Bob, 81927 München (DE)
(74) Vertreter: RDL Patentanwälte PartG mbB

(56) Entgegenhaltungen:
- EP-A1- 3 826 224
- US-A1- 2017 286 852
- THOMAS NDOUSSE-FETTER ET AL: "Quantum Networks For Open Science", ARXIV.ORG, CORNELL UNIVERSITY LIBRARY, 201 OLIN LIBRARY CORNELL UNIVERSITY ITHACA, NY 14853, 27 March 2019 (2019-03-27), XP081509962
- MATTHIAS GUNKEL ET AL: "Designing a Quantum Key Distribution Network - Methodology and Challenges", 9 May 2019 (2019-05-09), pages 49 - 51, XP002802617, Retrieved from the Internet <URL:https://ieeexplore.ieee.org/stamp/stamp.jsp?arnumber=8727121> [retrieved on 20210407]

## Beschreibung

Die vorliegende Erfindung betrifft ein Verfahren zur Planung eines quantenoptischen Netzwerks mit einer optimalen Anzahl von quantenoptischen Systemen für ein Telekommunikationsnetz. Ferner betrifft die vorliegende Erfindung ein entsprechendes System zur Durchführung des erfindungsgemäßen Verfahrens und ein mit dem erfindungsgemäßen Verfahren geplantes quantenoptisches Netz.

Betreiber von Telekommunikationsnetzen bzw. -netzwerken unterhalten in der Regel verschiedene Typen und Generationen von Netzwerken und Netzwerktechnologien, bestehend aus optischen Transportnetzwerken, Mobilfunknetzen verschiedener Generationen und kupferkabelgebundenen Netzwerken. Eine effektive Konfiguration und ein effektiver Betrieb der jeweiligen Netze bzw. Netzwerke ermöglicht es den Netzbetreibern, ihren Kunden einen bestmöglichen Service zu konkurrenzfähigen Preisen zu liefern.

In Glasfasernetzen sollen aus Gründen der Redundanz Netzwerkknoten über zwei unterschiedliche, redundante Strecken miteinander verbunden sein. Die optischen Netzwerke sind nicht notwendigerweise vollvermascht, d.h. es gibt nicht von jedem Netzwerkknoten zu jedem anderen Netzwerkknoten eine Direktverbindung, d.h. eine Netzwerkverbindung. Die Integration der optischen Netzwerke zu IP Netzwerken geschieht über IP Router in jeweiligen Netzwercknoten, die den IP Verkehr managen.

Eine Vertraulichkeit einer Kommunikation über die Telekommunikationsnetzwerke wird durch Quantencomputer, die in der Lage sind, den Shor Algorithmus auszuführen, gefährdet. Ein Angreifer wäre somit in der Lage, aktuelle asymmetrische Verschlüsselungssysteme anzugreifen. Verschlüsselungsverfahren, wie RSA (Rivest-Shamir-Adleman), ECC (Electronic Communication Code), Diffie Hellman bieten demnach keine ausreichende Sicherheit in einer "Post-Quantum-Ära".

In Telekommunikationsnetzen wäre die Verwendung symmetrischer Verschlüsselungsverfahren eine quantensichere Lösung, da der symmetrische Verschlüsselungsstandard AES-256 bei regelmäßigem Austausch eines kryptographischen Schlüssels als quantensicher gilt. NIST (National Institute of Standards and Technology) hat bereits öffentlich empfohlen, den AES-Verschlüsselungsschlüssel alle 1TBit Nutzlastdaten zu ändern, um sicherzustellen, dass das kryptographische System möglichen Quantenangriffen standhält. Eine Möglichkeit identische Schlüssel an je zwei Kommunikationspartner (hier Netzwerkknoten) mit einer geeigneten Schlüsselaustauschrate verteilen zu können, besteht darin, Quantum Key Distribution (QKD)-Systeme einzusetzen. QKD bietet die Möglichkeit zur sicheren Schlüsselverteilung bzw. zum sicheren Schlüsselaustausch zwischen zwei Netzwerkknoten. Die Technologie verwendet selbst Quanteneffekte, um sicherzustellen, dass jede Abhöraktivität erkannt wird, bevor sie Schaden anrichtet.

Es ist davon auszugehen, dass ein mittelgroßer, nationaler Netzbetreiber mehrere hundert Netzwerkknoten in seinem Netz bzw. Netzwerk betreibt. Im Falle der Sicherung eines Datenverkehrs innerhalb eines solchen Netzes mit Hilfe von QKD Systemen, fallen dabei sehr hohe Kosten an, da sich die Kosten allein eines QKD Systems auf derzeit ca. 100.000 EUR belaufen. Demnach ist es von hoher Relevanz, eine optimale Verteilung von QKD Systemen zur Sicherung der jeweiligen Datenverkehre innerhalb eines Netzes vorzusehen.

Bislang wurde das Problem der Planung von QKD Netzwerken bzw. allgemein von quantenoptischen Netzwerken noch nicht umfassend und zufriedenstellend gelöst. Klassische Verfahren, wie Spanning Tree oder Linear Constraint Programming wurden bereits zur Problemlösung verwendet, wie bspw. beschrieben in dem Dokument von Gunkel, Wissel, Poppe, Designing a Quantum Key Distribution Network - Methodology and Challenges, ITG-Fachbericht 287: Photonische Netze, 08. - 09.05.2019 in Leipzig, und veröffentlicht im Kontext des EU Flagship Projektes CiviQ. Allerdings liefern diese klassischen Verfahren keine vollständig zufriedenstellende Problemlösung.

EP 3 826 224 A1 beschreibt eine Übertragung von QKD-Signalen in einer quantengesicherten Netztopologie mit mindestens drei Netzknoten, wobei zur Erzeugung quantensicherer kryptographischer Schlüssel von einem Sender mindestens eines ersten Netzknotens einzelne Photonen an jeweils einen Empfänger mindestens zweier anderer (zweiter) Netzknoten ausgesendet werden. Hierbei werden alle von dem Sender des mindestens einen ersten Netzknotens ausgesendeten Photonen von derselben Photonenquelle des Senders emittiert und mittels mindestens eines, eine steuerbare QKD-Weiche ausbildenden Netzelementes auf die Empfänger der zweiten Netzknoten flexibel aufgeteilt. Dies geschieht, indem die mindestens eine steuerbare QKD-Weiche die ihr über eine Lichtleitfaser zugeführten Photonen ohne Beeinflussung, das heißt insbesondere ohne Messung ihrer für das verwendete QKD-Protokoll relevanten quantenmechanischen Eigenschaften, aus dieser Lichtleitfaser auskoppelt und sie über jeweils eine weitere Lichtleitfaser wechselnd verschiedenen Netzelementen, nämlich einem Empfänger eines zweiten Netzknotens oder einer weiteren QKD-Weiche zuleitet.

Thomas Ndousse-Fetter et al. erörtern in dem Artikel "Quantum Networks For Open Science", ARXIV.ORG, Cornell University Library, 201 Olin Library Cornell University Ithaca, NY 14853, 27. März 2019, XP081509962, allgemein die Problematik der Kontrolle eines quantenoptischen Netzes und dessen Design, insbesondere in Kombination mit Quantencomputern, um Wissenschaftlern modernste Rechenkapazitäten zur Verfügung stellen zu können.

Es war somit eine Aufgabe der vorliegenden Erfindung, eine weiter verbesserte Lösung zur Planung eines quantenoptischen Netzwerks für ein bzw. in einem Telekommunikationsnetz bereitzustellen.

Gelöst wird diese Aufgabe mit einem Verfahren und einem System mit den Merkmalen der jeweils unabhängigen Patentansprüche. Weitere Vorteile und Ausgestaltungen sind den abhängigen Patentansprüchen und der Beschreibung zu entnehmen.

Ein Gegenstand der Erfindung ist ein Verfahren zur Planung eines quantenoptischen Netzwerks mit einer optimalen Anzahl von quantenoptischen Systemen für mindestens einen definierten Anwendungsfall, wobei die optimale Anzahl der quantenoptischen Systeme auf Netzwerkknoten eines Telekommunikationsnetzes verteilt und implementiert wird bzw. zu verteilen und zu implementieren ist und einer jeweiligen Netzwerkverbindung einer Auswahl von die jeweiligen Netzwerkknoten verbindenden Netzwerkverbindungen mindestens ein Paar der quantenoptischen Systeme, im Folgenden auch quantenoptisches Systempaar genannt, operativ zugeordnet wird bzw. zuzuordnen ist, wobei die jeweiligen quantenoptischen Systeme paarweise auf den ihnen jeweils zugeordneten Netzwerkverbindungen über Quantenkanäle miteinander verbunden werden bzw. zu verbinden sind, wobei die optimale Anzahl der quantenoptischen Systeme (und dadurch die Zahl der Paare der quantenoptischen Systeme bzw. der quantenoptischen Systempaare) und die Auswahl der Netzwerkverbindungen bestimmt wird, indem für eine Kostenfunktion als Funktion mindestens der Anzahl der quantenoptischen Systeme als erster Bezugsgröße ein globales Extremum, vorzugsweise ein globales Minimum mit einem Optimierungsverfahren bestimmt wird.

In Ausgestaltung des erfindungsgemäßen Verfahrens ist das Telekommunikationsnetz ein optisches Netz. Dabei wird ausnahmslos auf allen Netzwerkknoten des optischen Netzes jeweils mindestens ein quantenoptisches System implementiert. Das bedeutet, dass das quantenoptische Netz alle Netzwerkknoten des optischen Netzes umfasst. In Abhängigkeit der paarweise operativen Zuordnung der quantenoptischen Systeme zu jeweiligen die Netzwerkknoten miteinander verbindenden Netzwerkverbindungen können mehrere quantenoptische Systeme auf einem Netzwerkknoten implementiert werden, sofern die Verkehre zwischen den Netzwerkknoten die dazu notwendigen Schlüsselaustauschraten zur Verschlüsselung erfordern.

In weiterer Ausgestaltung des erfindungsgemäßen Verfahrens werden die quantenoptischen Systeme als QKD Systeme gewählt. Demnach wird das zu planende quantenoptische Netzwerk als QKD Netzwerk durch eine erfindungsgemäß zu bestimmende bzw. bestimmte optimale Anzahl von auf die Netzwerkknoten verteilten und über jeweilige Quantenkanäle miteinander verbundenen QKD Systeme gebildet. Dabei wird ein jeweiliges QKD Systempaar, bestehend aus einem ersten QKD System und einem zweiten QKD System, auf zwei Netzwerkknoten verteilt und implementiert, wobei die zwei Netzwerkknoten über eine Netzwerkverbindung aus der erfindungsgemäß zu bestimmenden bzw. bestimmten Auswahl der Netzwerkverbindungen miteinander verbunden sind und das erste QKD System auf der Netzwerkverbindung über mindestens einen Quantenkanal mit dem zweiten QKD System verbunden wird.

Dabei dient das erfindungsgemäße Verfahren zur Suche einer optimalen Bereitstellung von QKD Systemen für ein beliebiges optisches Netzwerk. Berechnet wird dabei mit Hilfe der erfindungsgemäß vorgesehenen Kostenfunktion und des erfindungsgemäß zu verwendenden Optimierungsverfahrens und anhand der darüber bestimmten Auswahl von die jeweiligen Netzwerkknoten verbindenden Netzwerkverbindungen als optimale Anzahl eine minimale Anzahl an QKD Systemen sowie eine minimale Anzahl an Quantenkanälen, so dass heutige und zukünftige Datenverkehre in dem jeweiligen optischen Netzwerk sicher verschlüsselt und transportiert werden können.

Das erfindungsgemäße Verfahren ist nicht alleinig auf Planung eines QKD Netzwerks, d.h. auf die Optimierung der Verteilung von QKD Systemen in einem optischen Netzwerk beschränkt, sondern es lässt sich auf eine Optimierung bzw. Planung weiterer quantenoptischer Netzwerke mit quantenoptischen Systemen übertragen.

Diese beinhalten bspw.:
- Schlüsselaustausch in mobilen Netzwerken mit PQC KEM ("Post Quantum Cryptography & Key Encapsulation Mechanism") zur Berechnung einer Anzahl von Berechnungsressourcen ("Compute") an mobilen Netzwerkknoten zur Verschlüsselung jeweiliger Datenverkehre.
- Kapazitätsberechnungen für zukünftige Schlüsselaustausch- oder Bereitstellungsverfahren, insbesondere in den 5G/6G Mobilfunknetzen.
- Kapazitätsberechnungen für in Netzwerkknoten vorgehaltener Quantenverschränkung, um zukünftige Quantenprotokolle entsprechend angeforderter Datenverkehre durchführen zu können.
- Quantenoptische Netze mit Satelliten Link: Sind die Verkehrsanforderung über diesen Link, die maximale Kapazität des Links und die Adjazenzen bekannt, so fügt sich eine solche Konstellation nahtlos in das hierin beschriebene erfindungsgemäße Verfahren ein.

Das erfindungsgemäße Verfahren wird gemäß einer Ausführungsform für einen Provisionierungsanwendungsfall, vorzugsweise einen quantensicheren Zertifikatsaustausch in dem Telekommunikationsnetz, insbesondere in einem optischen Netzwerk durchgeführt.

Bei dem quantensicheren Zertifikatsaustausch werden eine minimale Anzahl von QKD Systemen und diese miteinander verbindenden Quantenkanälen gesucht, um eine hinreichende Anzahl von Schlüsselbits von einem zentralen Netzwerkknoten mit jedem anderen Netzwerkknoten des optischen Netzes austauschen zu können, im Folgenden kurz auch 1:N Fall genannt. Eine Anwendung des Verfahrens gewährleistet eine Sicherstellung eines automatischen, sicheren Austausches von Zertifikaten an alle Netzwerkknoten eines optischen Netzes eines Netzbetreibers.

Gemäß einer weiteren Ausführungsform wird das Verfahren für eine quantensichere Verschlüsselung von zu verschlüsselnden Verkehren unter allen Netzwerkknoten des Telekommunikationsnetzes, insbesondere des optischen Netzes, als definiertem Anwendungsfall durchgeführt.

Bei der quantensicheren Verschlüsselung der zu verschlüsselnden Verkehre unter allen Netzwerkknoten des optischen Netzes, im Folgenden kurz auch N:N Fall genannt, wird auch eine minimale Anzahl von QKD Systemen gesucht, um Schlüsselpaare für alle Kommunikationsstrecken innerhalb des optischen Netzwerks entsprechend einer Verkehrsmatrix provisionieren zu können.

Weiter vorzugsweise wird für jeden Pfad, über den ein erster Netzwerkknoten mit einem zweiten Netzwerkknoten verbunden wird, mindestens ein redundanter Pfad vorgesehen. Das bedeutet, dass im Falle von QKD Systemen bei beiden voranstehend beschriebenen Szenarien für jede QKD Strecke jeweils mindestens eine redundante QKD Strecke eingeplant wird, so dass Ausfallszenarien berücksichtigt werden können. Fällt somit eine QKD Strecke aus, beispielsweise durch Erdarbeiten, so soll ein Schlüsselaustausch mit der entsprechenden Schlüsselaustauschrate über andere QKD Strecken möglich sein. Eine QKD Strecke beschreibt dabei ausgehend von einem Anfangsnetzwerkknoten eine Kette von Netzwerkknoten und die Netzwerkknoten miteinander verbindenden Netzwerkverbindungen hin zu einem Endnetzwerkknoten, wobei auf jeweils zwei benachbarten Netzwerkknoten der Kette mindestens ein QKD Systempaar implementiert und der diese zwei Netzwerkknoten verbindenden Netzwerkverbindung zugeordnet ist, so dass ein quantensicherer Schlüsselaustausch zwischen Anfangs- und Endnetzwerkknoten der Kette möglich ist. Gemäß einer weiteren Ausführungsform des erfindungsgemäßen Verfahrens wird das globale Extremum, in der Regel das globale Minimum der Kostenfunktion bestimmt auf Basis eines Optimierungsverfahrens gewählt aus der Gruppe mindestens umfassend Monte Carlo Verfahren, vorzugsweise Simulated Annealing Verfahren, und Quantum Annealing Verfahren, vorzugsweise mit QUBO-Algorithmus.

Das bedeutet, dass das Problem zur Planung von QKD Netzwerken bzw. allgemein von quantenoptischen Netzwerken in Ausgestaltung des erfindungsgemäßen Verfahrens mit quantenmechanischen bzw. quantenmechanisch unterstützten Optimierungsverfahren gelöst wird. Daneben wird in alternativer Ausgestaltung des erfindungsgemäßen Verfahrens mit Simulated Annealing ein klassischer Ansatz bereitgestellt.

Zur näheren Erläuterung des erfindungsgemäßen Verfahrens am Beispiel einer Planung eines QKD Netzwerks, d.h. einer Verteilung von QKD Systemen in einem optischen Netzwerk werden zunächst die nachfolgenden beispielhaften Annahmen gemacht:
Gegeben sei ein Metronetzwerk, d.h. ein regionales optisches Netzwerk bestehend aus einer Menge von Netzwerkknoten und einem zentralen Netzwerkknoten. Die geographischen Koordinaten der Netzwerkknoten und die Adjazenzen, d.h. die Netzwerkverbindungen sind bekannt. Dabei ist zu beachten, wie eingangs erwähnt, dass nicht jeder Netzwerkknoten mit allen anderen Netzwercknoten über eine Netzwerkverbindung verbunden ist. Manche Netzwerkknoten sind mit anderen Netzwerkknoten über eine Aneinanderreihung von mehreren Netzwerkverbindungen und entsprechend über diese Netzwerkverbindungen verbundene Netzwerkknoten verbunden. Im Rahmen der vorliegenden Offenbarung ist unter einer Netzwerkverbindung eine direkte Verbindung zweier Netzwerkknoten, d.h. ohne dazwischenliegende Netzwerkknoten, zu verstehen. Aufgrund der unterschiedlichen geographischen Abstände wird für jede Netzwerkverbindung eine unterschiedliche maximale Schlüsselaustauschrate erreicht. Dieses jeweilige Kantengewicht, d.h. die jeweilige maximale Schlüsselaustauschrate lässt sich anhand der geographischen Netzwerkdaten für jede Netzwerkverbindung bestimmen.

Gegeben sei auch eine Verkehrsmatrix, d.h. das Datenvolumen, welches von jedem Netzwerkknoten mit jedem anderen Netzwerkknoten innerhalb des Netzwerks ausgetauscht wird. Die Verkehrsmatrix wird auch als "Origin Destination Matrix" (OD Matrix) bezeichnet. Je höher das zu übermittelnde und zu verschlüsselnde Datenvolumen ist, desto mehr QKD Schlüssel müssen pro Zeiteinheit zwischen den entsprechenden Netzwerkknoten über jeweilige Quantenkanäle ausgetauscht werden.

Jeder Netzwerkknoten kann als "Trusted Node" betrachtet werden. Es besteht somit die Möglichkeit, eine direkte QKD Punkt-zu-Punkt-Verbindung, d.h. eine Netzwerkverbindung zwischen zwei entfernten Netzwerkknoten A und C anzulegen, oder den Schlüsselaustausch über mindestens einen intermediären "Trusted Node" und damit über entsprechend mehrere Netzwerkverbindungen zu realisieren. Die direkte Verbindung A-C benötigt nur ein QKD Systempaar, erzeugt allerdings eine vergleichsweise niedrige Schlüsselaustauschrate. Andererseits erhöht die Verwendung eines "Trusted Nodes" B und die Realisierung eines Key Forwardings A - B - C die erzielbare maximale Schlüsselaustauschrate, jedoch verdoppeln sich die Kosten, da pro Netzwerkverbindung ein QKD Systempaar und somit hier zwei QKD Systempaare gebraucht werden. Parallele Verbindungen, d.h. eine Mehrfachanlegung von QKD Systemen an Endpunkten bzw. Netzwerkknoten einer jeweiligen Netzwerkverbindung sind explizit erlaubt.

Kommerzielle Netzwerke unterliegen Redundanzanforderungen, d.h. sofern eine QKD Verbindung, d.h. ein für den Schlüsselaustausch vorgesehener Quantenkanal während des täglichen Betriebes ausfällt, so soll die Funktion des gesamten Schlüsselaustauschnetzes bzw. QKD Netzes, d.h. allgemein des quantenoptischen Netzes noch gewährleistet bleiben. Als maximaler Ausfall soll in dieser Problemdefinition nur ein gleichzeitiger Ausfall einer Netzwerkverbindung angenommen werden. Es kann aber jeder der Quantenkanäle ausfallen.

Der Schlüsselaustausch soll auch in diesem Fall weiter funktionieren, d.h. jeder Netzwerkknoten soll weiterhin mit der notwendigen Schlüsselanzahl über andere QKD Strecken und damit andere Quantenkanäle versorgt werden können.

Im Folgenden wird zunächst als erfindungsgemäß verwendbares Optimierungsverfahren der klassische Ansatz, d.h. das Simulated Annealing beschrieben.

Simulated Annealing beschreibt ein bekanntes Optimierungsverfahren, welches sich in die Gruppe der Monte Carlo Verfahren einordnen lässt. Im Zuge der Optimierung bzw. der Bestimmung des globalen Extremums der Kostenfunktion werden jeweilige Lösungskandidaten, d.h. Netzwerkknoten des Telekommunikationsnetzes mit einer Anzahl darauf paarweise verteilter und implementierter QKD Systeme und eine jeweilige Gruppe von die jeweiligen Netzwerkknoten verbindenden und den QKD Systempaaren jeweilig zugeordneten Netzwerkverbindungen, zufällig oder entsprechend einer Strategie gewürfelt und die Qualität eines jeweiligen Lösungskandidaten über die Kostenfunktion, d.h. über den Wert, den die Kostenfunktion für diesen Lösungskandidaten annimmt, evaluiert.

Im Rahmen der vorliegenden Offenbarung ist unter einem jeweiligen Lösungskandidaten eine jeweilige Konfiguration aus Netzwerkknoten des Telekommunikationsnetzes mit einer Anzahl darauf paarweise verteilter und implementierter quantenoptischer Systeme und einer Gruppe von die jeweiligen Netzwerkknoten verbindenden und jeweilig mindestens einem quantenoptischen Systempaar zugeordneten Netzwerkverbindungen zu verstehen, die im Zuge des Optimierungsverfahrens iterativ aus der Menge aller möglichen Konfigurationen ausgewählt wird und für die im Zuge des Optimierungsverfahrens die Kostenfunktion jeweils berechnet und der Wert der Kostenfunktion jeweils evaluiert wird und die, falls der Wert der Kostenfunktion noch nicht dem angestrebten Extremum, insbesondere dem angestrebten Minimum zumindest näherungsweise entspricht, im nächsten Iterationsschritt variiert wird, d.h. im nächsten Iterationsschritt wird jeweils eine neue Konfiguration aus Netzwerkknoten mit einer neuen Anzahl darauf paarweise verteilter und implementierter quantenoptischer Systeme und einer neuen Gruppe von die jeweiligen Netzwerkknoten verbindenden und jeweilig mindestens einem quantenoptischen Systempaar zugeordneten Netzwerkverbindungen ausgewählt.

Ein jeweiliger Lösungskandidat ist eine jeweilige Konfiguration von Netzwercknoten mit einer Anzahl darauf paarweise verteilter und implementierter quantenoptischer Systeme und mit einer jeweiligen Gruppe von die jeweiligen Netzwerkknoten verbindenden und jeweilig mindestens einem quantenoptischen Systempaar zugeordneten Netzwerkverbindungen, wobei ein jeweiliger Wert der Kostenfunktion für den jeweiligen Lösungskandidaten unter der Annahme, dass auf den Netzwerkknoten der jeweiligen Konfiguration die Anzahl der quantenoptische Systeme der jeweiligen Konfiguration verteilt und implementiert sind, wobei die quantenoptischen Systeme paarweise auf den die jeweiligen Netzwerkknoten verbindenden Netzwerkverbindungen der Gruppe von Netzwerkverbindungen der jeweiligen Konfiguration über Quantenkanäle miteinander verbunden sind, berechnet wird. Dabei ist zu beachten, dass jedes quantenoptische System nur einem quantenoptischen Systempaar und somit nur einer Netzwerkverbindung zuordenbar bzw. zugeordnet ist. Das bedeutet, dass von einem Paar an quantenoptischen Systemen jeweils ein Partner auf einem ersten Netzwerkknoten und der entsprechend andere Partner auf einem zweiten über eine Netzwerkverbindung mit dem ersten Netzwerkknoten verbundenen Netzwerkknoten zu implementieren ist. Das bedeutet umgekehrt, dass einer Netzwerkverbindung ein Paar an quantenoptischen Systemen zuordenbar ist, wobei ein Partner des quantenoptischen Systempaars auf dem Netzwercknoten an einem Ende der Netzwerkverbindung und der entsprechend andere Partner des quantenoptischen Systempaars auf dem Netzwerkknoten am anderen Ende der Netzwerkverbindung angeordnet bzw. implementiert ist. Das Optimierungsverfahren umfasst ausgehend von einem nullten Iterationsschritt in der Regel mehrere aufeinanderfolgende Iterationsschritte. Ausgehend von einem Start-Lösungskandidaten bzw. einer Start-Konfiguration in dem nullten Iterationsschritt wird in jedem Iterationsschritt ein anderer gegenüber den vorangegangenen Iterationsschritten variierter Lösungskandidat gewählt, wobei hierbei insbesondere die jeweilige Anzahl der quantenoptischen Systeme und die jeweilige Gruppe von die jeweiligen Netzwerkknoten verbindenden und jeweilig mindestens einem quantenoptischen Systempaar zugeordneten Netzwerkverbindungen variiert wird, und entsprechend iterativ wird für den jeweils anderen Lösungskandidat ein Wert der Kostenfunktion berechnet bis der berechnete Wert der Kostenfunktion zumindest näherungsweise dem globalen Extremum, insbesondere dem globalen Minimum entspricht. Der Lösungskandidat, für den der Wert der Kostenfunktion zumindest näherungsweise dem globalen Extremum, insbesondere dem globalen Minimum entspricht, ist dann die gesuchte Lösung bzw. Konfiguration, deren Anzahl der quantenoptischen Systeme der erfindungsgemäß zu bestimmenden optimalen Anzahl der quantenoptischen Systeme und deren Gruppe von die jeweiligen Netzwerkknoten verbindenden Netzwerkverbindungen der erfindungsgemäß zu bestimmenden Auswahl an die jeweiligen Netzwerkknoten verbindenden Netzwerkverbindungen entspricht.

Im Rahmen der vorliegenden Offenbarung schließt "Bestimmung des globalen Extremums der Kostenfunktion, insbesondere des globalen Minimums der Kostenfunktion" eine Näherung des globalen Extremums, insbesondere des globalen Minimums der Kostenfunktion ein. Das bedeutet, dass beim Bestimmen des globalen Extremums bzw. des globalen Minimums der Kostenfunktion entweder das globale Extremum bzw. das globale Minimum exakt oder zumindest näherungsweise, d.h. so genau wie durch das Optimierungsverfahren möglich oder durch ein Abbruchkriterium definiert, festgestellt wird. Derjenige Lösungskandidat, bei dessen Anwendung die Kostenfunktion das globale Extremum einnimmt, entspricht der gesuchten Lösung und weist als Anzahl der quantenoptischen Systeme die erfindungsgemäß zu bestimmende optimale Anzahl der quantenoptischen Systeme und als Gruppe von die jeweiligen Netzwerkknoten verbindenden Netzwerkverbindungen genau die erfindungsgemäß zu bestimmende Auswahl der Netzwerkverbindungen auf. Das bedeutet, dass mit Bestimmung des globalen Extremums der Kostenfunktion und dadurch mit Bestimmung der Lösung die optimale Anzahl der quantenoptischen Systeme und mittelbar die Auswahl der Netzwerkeverbindungen bestimmt wird.

Ferner werden im Rahmen der vorliegenden Offenbarung die Begriffe "Netz" und "Netzwerk" synonym zueinander verwendet.

Weiter ist im Rahmen der vorliegenden Offenbarung unter einer "Kante" eine Netzwerkverbindung zwischen zwei benachbarten Netzwerkknoten zu verstehen, wobei die Netzwerkverbindung eine direkte Verbindung zwischen den zwei Netzwerkknoten darstellt und keinen zwischen den zwei Netzwerkknoten liegenden Netzwerkknoten passiert. Ein "Pfad" kann demgegenüber aus einer Kante oder aus einer Aneinanderreihung von mehreren Kanten gebildet werden und kann demnach über mehrere Netzwerkknoten verlaufen. In einem quantenoptischen Netz ist jeder Kante mindestens ein, unter Berücksichtigung einer Redundanz sind jeder Kante mindestens zwei Quantenkanäle zugeordnet. Folglich sind in einem quantenoptischen Netz einem Pfad entsprechend mindestens ein, in der Regel mehrere Quantenkanäle zugeordnet.

Ein erster Teil der Kostenfunktion berücksichtigt die Anzahl der quantenoptischen Systeme, d.h. in dem vorliegenden Beispiel die Anzahl der QKD Systeme. So kann der erste Teil der Kostenfunktion bspw. aus der Summe aller QKD Systempaare bestehen, die ein jeweiliger Lösungskandidat, d.h. eine jeweilige Konfiguration aufweist. Je mehr QKD Systeme für den Lösungskandidaten verbaut werden müssen, desto höher sind die Kosten der Lösung bzw. des Lösungskandidaten. Dieser Lösungsansatz gilt sowohl für den 1:N Fall (Beispiel des Zertifikatsaustausches) als auch für den N:N Fall (Beispiel der Verschlüsselung des gesamten Datenverkehrs).

Um Lösungskandidaten bzw. Konfigurationen mit gleicher Anzahl von quantenoptischen Systemen, hier QKD Systemen, unterscheiden zu können, umfasst die Kostenfunktion in weiterer Ausgestaltung des erfindungsgemäßen Verfahrens als mindestens eine weitere Bezugsgröße mindestens Schlüsselaustauschraten an den Netzwerkknoten über die jeweiligen Netzwerkknoten verbindende Pfade, wobei ein jeweiliger Pfad aus einer oder mehreren jeweils zwei Netzwerkknoten (mit einem darauf verteilten und implementierten QKD Systempaar) verbindenden Netzwerkverbindungen gebildet wird. Die erste Bezugsgröße und jede weitere Bezugsgröße werden dabei jeweils in einem mit einem jeweils definierten Wichtungsparameter versehenden Term in der Kostenfunktion berücksichtigt wird, wobei die Terme insbesondere aufsummiert werden. Bezüglich der Schlüsselaustauschraten gilt in der Regel, dass diese möglichst hoch sein sollen.

Beispielsweise berücksichtigt die Kostenfunktion für das vorliegende Beispiel in weiteren Teilen die folgenden weiteren Bezugsgrößen und Bedingungen:
- Für den quantensicheren Zertifikatsaustausch (1:N Fall) sollen in abnehmender Priorität die folgenden Bedingungen erfüllt werden:
   - Die Schlüsselaustauschraten sollen an allen Netzwerkknoten des Netzwerks maximiert werden. Dazu werden Pfade, die kapazitive Engstellen aufweisen, "bestraft" und entsprechend mit höheren Kosten belegt. Ein optimaler Pfad weist eine abfallende Kapazität der Kanten bzw. Quantenkanäle von dem zentralen Netzwerkknoten zu den entfernteren Netzwerkknoten auf.
   - Lösungskandidaten mit nicht verbundenen Graphen, die z.B. aus zwei disjunkten Graphen bestehen, d.h. nicht jeder Netzwerkknoten ist zumindest mittelbar mit jedem anderen Netzwerkknoten verbunden, werden verworfen.
   - Lösungskandidaten mit nicht validen redundanten Lösungen werden verworfen. Dazu wird jeder Lösungskandidat dahingehend validiert, dass von jedem Netzwerkknoten bei Wegfall einer jeden Netzwerkkante, d.h. eines jeden Quantenkanals, eines zum zentralen Netzwerkknoten führenden Pfads, noch ein redundanter Pfad zum zentralen Netzwerkknoten führt.
   - Die Schlüsselaustauschraten sollen an allen Netzwerkknoten des Netzwerkes auch über den redundanten Pfad maximiert werden. Auch in diesem Fall weist ein optimaler Pfad eine abfallende Kapazität der Kanten, d.h. Quantenkanäle entlang des Pfades vom zentralen Netzwerkknoten zu den entfernten Netzwerkknoten auf.
- Für eine quantensichere Verschlüsselung der gesamten Datenverkehre (N:N Fall) sollen in abnehmender Priorität die folgenden Bedingungen erfüllt werden:
   - Die Schlüsselaustauschraten sollen die, durch die Verkehrsmatrix angeforderten Verkehre verschlüsseln können. Ist dazu ein QKD Systempaar nicht in der Lage, weil bspw. die Distanz zwischen den zwei das QKD Systempaar implementierenden Netzwerkknoten zu groß ist, so sollen weitere QKD Systempaare eingefügt werden.
   - Die Schlüsselaustauschraten sollen an allen Netzwerkknoten maximiert werden. Dazu sollen stark belastete Pfade dahingehend bevorzugt werden, dass sie über Netzwerkkanten, d.h. Quantenkanäle mit großer Kapazität geleitet werden.
   - Im Falle einer asymmetrischen Verkehrsanforderung, d.h. sind die Verkehre von Netzwerkknoten A zu B grösser als von B zu A, so werden die größeren Verkehre für die Berechnung herangezogen.
   - Lösungskandidaten mit nicht verbundenen Graphen, die z.B. aus zwei disjunkten Graphen bestehen, werden verworfen.
   - Lösungskandidaten mit nicht validen redundanten Lösungen werden verworfen. Dazu wird jeder Lösungskandidat dahingehend validiert, dass jeder Netzwerkknoten bei Wegfall einer jeden Netzwerckante eines Pfades noch einen redundanten Pfad zu jedem anderen Netzwerkknoten besitzt.
   - Die Schlüsselaustauschraten sollen an allen Netzwerkknoten des Netzwerkes auch über den redundanten Pfad maximiert werden.

Die einzelnen Terme der Kostenfunktion werden für die Optimierungsaufgabe bzw. das Optimierungsverfahren addiert und ggfs. jeweils mit einem frei wählbaren Wichtungsparameter multipliziert. Die konkrete mathematische Form der Kostenfunktion ist für das erfindungsgemäß zu verwendende Optimierungsverfahren, hier insbesondere für das klassische Simulated Annealing Verfahren irrelevant.

Im Zuge des Simulated Annealing Verfahrens wird nun jeder Lösungskandidat einer Beurteilung durch die Kostenfunktion unterworfen. Bedeutet eine Variation des Lösungskandidaten, d.h. insbesondere eine Variation der Anzahl der quantenoptischen Systeme und/oder der Gruppe von die jeweiligen Netzwerkknoten verbindenden und jeweilig mindestens einem quantenoptischen Systempaar zugeordneten Netzwerkverbindungen, niedrigere Ausbaukosten bei besserer Netzwerkkonfiguration, d.h. ein geringerer Wert der Kostenfunktion, so wird die Variation bzw. der neue Lösungskandidat besser bewertet als in der Situation zuvor bzw. als der vorherige Lösungskandidat. Wird kein besserer Wert der Kostenfunktion durch Variation gefunden, so besteht bei dem Simulated Annealing Verfahren auch die Möglichkeit, ein schlechteres Ergebnis, d.h. einen im Hinblick auf die angestrebte Optimierung schlechteren Wert der Kostenfunktion zu akzeptieren. Dieser Fall wird über eine temperaturabhängige Boltzmann Wahrscheinlichkeitsverteilung bewertet, d.h. die Wahrscheinlichkeit einer Verschlechterung bzw. eines schlechteren Werts der Kostenfunktion, in der Regel eines höheren Werts der Kostenfunktion (wenn ein globales Minimum angestrebt wird), hängt von einem Temperaturwert des Algorithmus ab.

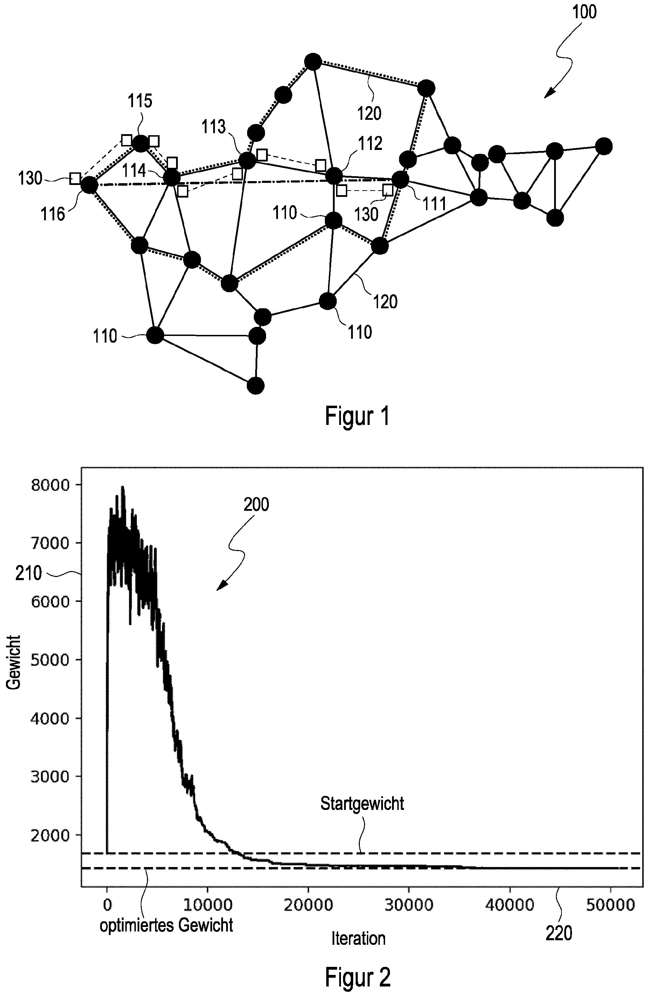

Die Temperatur des Systems kühlt sich während der Laufzeit des Algorithmus ab, so dass beschriebene temporäre Verschlechterungen während der Laufzeit des Algorithmus immer unwahrscheinlicher werden. Somit konvergiert der Algorithmus durch den Temperaturwert. Alternativ kann der Algorithmus durch ein Abbruchkriterium beendet werden. Figur 2 zeigt die Entwicklung der Kostenfunktion bei Anwendung des Simulated Annealing Verfahrens.

Wie voranstehend am Beispiel des Simulated Annealing Verfahrens bereits ausgeführt, umfasst die Kostenfunktion in weiterer Ausgestaltung des erfindungsgemäßen Verfahrens als mindestens eine weitere Bezugsgröße mindestens Schlüsselaustauschraten an den Netzwerkknoten über die jeweiligen Netzwerkknoten verbindende Pfade, wobei ein jeweiliger Pfad aus einer oder mehreren jeweils zwei Netzwerkknoten verbindenden Netzwerkverbindungen gebildet wird. Dabei werden die erste Bezugsgröße und jede weitere Bezugsgröße jeweils in einem mit einem jeweils definierten Wichtungsparameter versehenden Term in der Kostenfunktion berücksichtigt, wobei die Terme vorzugsweise aufsummiert werden.

Ferner umfasst, wie ebenfalls am Beispiel des Simulated Annealing ausgeführt, in weiterer Ausgestaltung des erfindungsgemäßen Verfahrens die Kostenfunktion als Nebenbedingung mindestens, dass alle Netzwerkknoten des optischen Netzes über jeweilige einen oder mehrere Quantenkanäle umfassende Pfade miteinander verbunden sein müssen, insbesondere dass alle Netzwerkknoten des optischen Netzes über mindestens zwei zueinander redundante und jeweils einen oder mehrere Quantenkanäle umfassende Pfade miteinander verbunden sein müssen.

Als quantenmechanischer Ansatz für das Optimierungsverfahren wird in weiterer Ausgestaltung das Quantum Annealing als Metaheuristik verwendet, um für die Kostenfunktion eine annähernd optimale Lösung, d.h. ein globales Extremum, insbesondere Minimum zu finden. Dabei wird die Kostenfunktion mit Hilfe einer QUBO (Quadratic Unconstrained Binary Optimization) formuliert. Die QUBO selbst besteht aus Bedingungen und Kosten. Durch die Bedingungen wird eine valide Lösung, d.h. Konfiguration aus Netzwerkknoten mit einer Anzahl von quantenoptischen Systemen und einer Gruppe von die jeweiligen Netzwerkknoten verbindenden und jeweils mindestens einem quantenoptischen Systempaar zugeordneten Netzwerkverbindungen, erzwungen. Die Kosten wiederum sind maßgeblich für die Güte einer validen Lösung. Je höher die Güte, desto optimaler ist die Lösung. Die Maximierung der Güte bzw. die Minimierung der QUBO, d.h. der Kostenfunktion, ist das Ziel des Quantum Annealings. Darüber hinaus benutzt das Quantum Annealing quantenmechanische Effekte und Phänomene. Zu nennen sind hierbei die Quantenverschränkung sowie die Quantentunnelung.

Die Quantentunnelung erlaubt es, aus einem lokalen Minimum der Kostenfunktion zu entfliehen, indem durch die begrenzende Potentialbarriere getunnelt wird. Dadurch werden möglicherweise bessere Minima, insbesondere ein globales Minimum gefunden. Der klassische Ansatz des Simulated Annealing nutzt einen Thermal Jump, um über die Potentialbarriere zu springen oder versucht die Potentialbarriere abzulaufen. Das erfordert einen höheren Aufwand mit einer niedrigeren Erfolgswahrscheinlichkeit als dies bei der Quantentunnelung des Quantum Annealing der Fall ist, wie bspw. beschrieben in Quantum Annealing in the Transverse Ising Model, Tadashi Kadowaki and Hidetoshi Nishimori, Department of Physics, Tokyo Institute of Technology, Oh-okayama, Megro-ku, Tokyo 152-8551, Japan, February 1, 2008. Dieser Vorteil wird umso größer, je größer die Unterschiede bzgl. der Güte zwischen allen möglichen validen Lösungskandidaten bzw. Konfigurationen sind.

Konkret bedeutet das für den Fall des quantensicheren Zertifikatsaustausch (1:N Fall), dass über die Bedingungen der Kostenfunktion ein Minimaler Spanning Tree, MST, erzwungen wird.
- 1:N-QUBO
   - Die Bedingungen sind:
      - Es gibt genau einen zentralen Netzwerkknoten.
      - Jeder Netzwerkknoten ist im quantenoptischen Netzwerk enthalten.
      - Jeder Netzwerkknoten und jede Kante bzw. jeder Quantenkanal hat genau eine Tiefe, d.h. eine relative Position / Distanz zum zentralen Netzwerkknoten.
      - Jeder Netzwerkknoten hat genau einen Vorgängernetzwerkknoten und maximal eine vordefinierte Anzahl an Nachfolgernetzwerkknoten.
      - Jede Kante, d.h. jeder Quantenkanal hat genau eine Richtung.
      - Jeder Netzwerkknoten der Tiefe i ist, mit Ausnahme des zentralen Netzwerkknotens, mit seinem Vorgängernetzwerkknoten der Tiefe i-1 über eine Kante bzw. über einen Quantenkanal der Tiefe i verbunden (Konnektivitätsbedingung).
   - Kosten
   - Die Kostenstruktur besteht aus der inversen Schlüsselaustauschrate der Kanten mit einer alternativen Tiefenkomponente zwecks Quantentunnelung.

Für den Fall der quantensicheren Verschlüsselung der zu verschlüsselnden Verkehre unter allen Netzwerkknoten (N:N Fall) wird in möglicher Ausgestaltung wegen hardwarebedingter Einschränkungen der derzeit verfügbaren Quantensolver ein N*(1:N) Szenario erzwungen. Das bedeutet, dass N-mal ein, an das N:N adaptierte, 1:N Szenario (kein MST) angewendet wird. Die Adaptation besteht im Wesentlichen aus der Notwendigkeit geänderter Bedingungen, einer erweiterten Kostenstruktur und Pfade, d.h. Aneinanderreihungen von mehreren Netzwerkverbindungen, anstatt nur Kanten, d.h. einzelnen Netzwerkverbindungen zu benutzen.
- N*(1:N)-QUBO
   - Bedingungen
      - Jeder Netzwerkknoten ist im quantenoptischen Netzwerk enthalten.
      - Das quantenoptische Netzwerk enthält für jeden Netzwerkknoten genau einen Pfad zu jedem weiteren Netzwerkknoten (minimale Konnektivitätsbedingung).
      - Für jeden Pfad werden alle Teilpfade dem quantenoptischen Netzwerk hinzugefügt.
   - Kosten
      - Die Kostenstruktur beinhaltet die inversen Schlüsselaustauschraten der Kanten, die klassifizierten Pfade (Exzellent, Gut, Schlecht, Sehr schlecht), asymmetrische Pfadkosten zwecks einer Flaschenhalsvermeidung und ein Discount-Prinzip. Letzteres bedeutet, dass je öfter eine Kante in den vorherigen 1:N Durchgängen ausgewählt wurde, desto billiger wird diese Kante im weiteren Verlauf. Somit steigt die Wahrscheinlichkeit, dass diese Kante Bestandteil der finalen Lösung ist.

Zum Abschluss des N*(1:N)-Falls wird noch ein Filter angewendet, um beim Aufbau einer validen Lösung jene Kanten auszuschließen, die weder häufig ausgewählt worden sind, noch eine hohe Schlüsselaustauschrate besitzen. Im Idealfall ergibt sich dann ein Netzwerk mit genau N-1 Kanten, wobei aber kein zentraler Netzwerkknoten wie beim MST definiert wurde. Weiterhin kann aber nicht ausgeschlossen werden, dass dieses Netzwerk mehr als N-1 Kanten enthält und damit vom Idealfall abweicht. Hierfür verantwortlich ist die Anwendung des Filters. Dieser basiert ausschließlich auf den Häufigkeiten und den Schlüsselaustauschraten der Kanten, wobei die minimale Konnektivität als erfolgreiche Abbruchbedingung fungiert. D.h. beginnend mit einem kantenlosen Netzwerk, werden diesem solange gefilterte Kanten hinzugefügt bis alle Netzwerkknoten direkt oder mittelbar miteinander verbunden wurden und somit eine valide Lösung vorliegt.

Für die Ausfallsicherung beider Fälle, d.h. für die in Ausgestaltung der Erfindung vorzusehende Redundanz, wird sowohl eine 3-Redundanz (3Red) als auch eine Kreis-Redundanz verwendet. Die 3-Redundanz bzw. Dreieck-Redundanz verfolgt einen kleinräumigen Ansatz, dass für jeden Netzwerkknoten ein Dreieck konstruiert wird. D.h. ein Dreieck besteht ausschließlich aus einem Netzwerkknoten und seinen direkten Nachbarnetzwerkknoten.
- 3Red-QUBO
   - Voraussetzung
      - Verfügbarkeit eines 1:N-Netzwerks
   - Bedingungen
      - Jeder Netzwerkknoten ist im quantenoptischen Netzwerk enthalten.
      - Jede Kante, d.h. jeder Quantenkanal hat genau eine Richtung.
      - Für jede 3-Redundanz werden die entsprechenden Kanten dem Netzwerk hinzugefügt.
      - Jeder Netzwerkknoten hat genau eine 3-Redundanz, sofern möglich.
      - Die Konnektivitätsbedingung besteht ausschließlich aus dem 1:N-Netzwerk.
   - Kosten
      - Die Kostenstruktur besteht aus der inversen Schlüsselaustauschrate der Kanten.

Im Gegensatz dazu repräsentiert die Kreis-Redundanz (KRed) einen weiträumigen Ansatz. Dabei wird versucht, unter Berücksichtigung hardwarebedingter Einschränkungen, so große Kreise wie möglich zu konstruieren. Das hat den Vorteil gegenüber der Dreieck-Redundanz, dass die Anzahl der Kanten stärker minimiert wird. Auf der anderen Seite kommt das Problem von Brücken hinzu. Es kann nämlich vorkommen, dass jeder Netzwerkknoten zu einer Kreis-Redundanz gehört, aber nicht jede Kante. Die Lösung dieses Problems wird durch eine gezielte Nachbearbeitung sichergestellt. Der Ansatz der Nachbearbeitung besteht aus der Erkenntnis, dass beide Netzwerkknoten einer jeweiligen Brücke keine Kreis-Redundanz zu irgendeinem Netzwerkknoten auf der anderen Brückenseite haben. Also wird die Kreis-Redundanz neu berechnet, mit der Bedingung, dass einer dieser (ehemaligen) Brückennetzwerkknoten nun eine entsprechende Kreis-Redundanz haben muss.
- KRed-QUBO
   - Voraussetzung
      - Verfügbarkeit eines 1:N-Netzwerk
      - Finde alle möglichen Kreis-Redundanzen für einen bestimmten Netzwerkknoten, unter Berücksichtigung hardwarebedingter Einschränkungen.
   - Bedingungen
      - Für jede Kreis-Redundanz werden die entsprechenden (Redundanz-) Netzwerkknoten dem quantenoptischen Netzwerk hinzugefügt.
      - Jede Kante hat genau eine Richtung.
      - Es gibt genau eine Kreis-Redundanz für einen bestimmten Netzwerkknoten in dem quantenoptischen Netzwerk.
      - Für jede Kreis-Redundanz werden die entsprechenden Kanten dem quantenoptischen Netzwerk hinzugefügt.
      - Verbiete alle Kreis-Redundanzen, die zu Brücken geführt haben. (Nachbearbeitung)
      - Die Konnektivitätsbedingung besteht ausschließlich aus dem 1:N-Netzwerk.
   - Kosten
      - Die Kostenstruktur beinhaltet die inversen Schlüsselaustauschraten der Kanten, die klassifizierten Pfade (Exzellent, Gut, Schlecht, Sehr schlecht), die asymmetrischen Pfadkosten zwecks Flaschenhalsvermeidung und die aus den Pfadkosten resultierenden Redundanzkosten.

Gemäß einer weiteren Ausführungsform des erfindungsgemäßen Verfahrens wird für einen jeweiligen definierten Anwendungsfall unter Einbeziehung von Redundanz eine jeweilige Planungsheuristik zur Planung des quantenoptischen Netzwerks erstellt. Dabei werden ein an den jeweiligen Anwendungsfall angepasster Minimum Spanning Tree, MST, berechnet und Blätter des an den jeweiligen Anwendungsfall angepassten Minimum Spanning Tree in Form von Netzwerkkreisen verbunden.

Das erfindungsgemäße Verfahren führt in weiterer Ausgestaltung, im Falle, dass ein QKD Netz als quantenoptisches Netz geplant werden soll, zu der folgenden Heuristik zur Planung des QKD Netzes:
Gegeben sei ein optisches Netzwerk aus Netzwerkknoten und Netzwerkkanten, d.h. Netzwerkverbindungen, wobei ein Kantenattribut die maximale Schlüsselaustauschrate beschreibt. Eine Verkehrsmatrix beschreibt die Verkehre zwischen allen Netzwerkknoten und stellt somit die Anforderung für die minimal notwendige Schlüsselaustauschrate dar.
- Für den quantensicheren Zertifikatsaustausch (1:N Fall) ist es hinreichend mit klassischen Methoden, unabhängig von den Verkehrsmatrizen, den Minimum Spanning Tree (MST) zu berechnen. Der MST lässt sich mit klassischen Computern in polynomialer Laufzeit berechnen. Der MST ist nicht als Bedingung in die Kostenfunktion eingegangen.
- Für eine quantensichere Verschlüsselung der gesamten Datenverkehre (N:N Fall) ist es ebenfalls hinreichend, unabhängig von den Verkehrsmatrizen, einen Minimum Spanning Tree (MST) von dem Netzwerkknoten mit dem stärksten Verkehrsaufkommen zu berechnen.

Zur Einbeziehung der Redundanzen sollen die Blätter des MSTs in Form von "Netzwerkkreisen" verbunden werden. Entfernte Netzwerkknoten erzeugen entfernte Kreise, nahe Netzwerkknoten nahe Kreise. Die beschriebenen Netzwerckreise erzeugen die notwendige Redundanz im quantenoptischen Netzwerk.

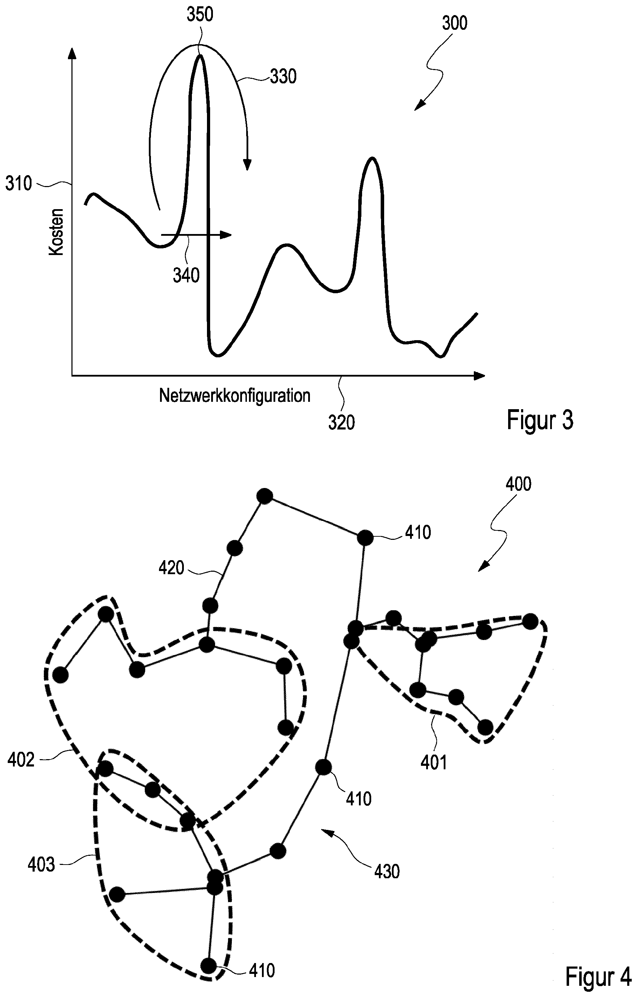

Dieser Prozess ist beispielhaft in Figur 4 dargestellt. Konkret werden hierbei Verbindungen im quantenoptischen Netzwerk entlang der durch gestrichelte Linien markierten Kreise eingefügt. Diese Netzwerkverbindungen waren nicht Teil der berechneten (1:N) Lösung, sondern es werden bestehende Adjazenzen ausgewählt, die sich zu den dargestellten Kreisen ergänzen. In Spezialfällen kann es sich als sinnvoll erweisen, zuvor bestehende Verbindungen wieder zu entfernen.

Quantenoptische Netzwerke, insbesondere eine optimale Verteilung von QKD Systemen zur Sicherung von Datenverkehren in einem optischen Netzwerk, wurden bisher noch nicht mit Monte Carlo bzw. quanten-IT Methoden gerechnet. Die QKD Netzplanung und -optimierung ist eine neue Disziplin, die mit den neuen Möglichkeiten der Quantentechnologien entsteht.

Der Nutzen der QKD Netzplanung ist offensichtlich. Ein hypothetischer, mittelgroßer, nationaler Netzbetreiber betreibt mehrere hundert Netzwerkknoten in seinen optischen Netzen. Die Kosten einen QKD Systems belaufen sich auf derzeit ca. 100.000 €/System, so dass hier bereits über Investitionen im mehrstelligen Millionen € Bereich gesprochen werden kann.

Das erfindungsgemäße Verfahren ermöglicht erhebliche Einsparungen an QKD System-Installationen. Ferner werden von der vorliegenden Erfindung Heuristiken vorgestellt, die eine automatisierte Netzwerkplanung unabhängig von einem jeweils gewählten Optimierungsverfahren ermöglichen, und somit helfen, Prozess- und Verfahrenskosten einzusparen.

Gerade im Rahmen der EuroQCI Initiative (EuroQCI Initiative of the EU, https://digital-strategy.ec.europa.eu/en/news/future-quantum-eu-countries-planultra-secure-communication-network) der europäischen Union ist abzusehen, dass in Kürze alle europäischen Netzbetreiber das Problem der Planung von quantenoptischen Netzwerken haben werden.

Wie voranstehend bereits erläutert, ist die Erfindung nicht alleinig auf die Optimierung des Quantenschlüsselaustausches (QKD) beschränkt, sondern die Erfindung lässt sich auf weitere quantenoptische Netzwerke übertragen.

Das erfindungsgemäße Verfahren ermöglicht:
- Optimierung von quantenoptischen Netzwerken, insbesondere eines QKD Netzwerks im Providerkontext hinsichtlich eines minimalen Deployments und einer maximal kosteneffizienten Nutzung der QKD Systeme;
- Klassisches Monte Carlo / Simulated Annealing Verfahren mit adaptierter Kostenfunktion;
- Quantum Annealing Verfahren mit definierten QUBO / Ising Modell;
- Optimierung mit Redundanz;
- Optimiertes Deployment/Einsatz der quantenoptischen Systeme, bspw. der QKD Systeme (kosten- und effizienzoptimiert):
   - Optimierung für einen Provisionierungsanwendungsfall, z.B. ein sicherer Zertifikatsaustausch in einem jeweiligen optischen Netzwerk;
   - Optimierung für den Anwendungsfall der Verschlüsselung aller Verkehre in einem jeweiligen optischen Netzwerk;
- Darstellung von Heuristiken zur Netzwerkplanung eines quantenoptischen Netzes unabhängig von dem jeweils gewählten Optimierungsverfahren:
   - für den Provisionierungsanwendungsfall;
   - für die Verschlüsselung aller Verkehre;
   - unter Einbeziehung von Redundanz.

Ein weiterer Gegenstand der Erfindung ist ein System zur Planung eines quantenoptischen Netzwerks mit einer optimalen Anzahl von quantenoptischen Systemen für einen definierten Anwendungsfall, wobei die optimale Anzahl der quantenoptischen Systeme auf Netzwerkknoten eines Telekommunikationsnetzes, insbesondere auf die Netzwerkknoten eines optischen Netzes zu verteilen und zu implementieren ist. Das erfindungsgemäße System umfasst mindestens einen Prozessor, auf dem mindestens ein Solver gespeichert und implementiert ist, der dazu konfiguriert ist, bei Ablauf auf dem mindestens einen Prozessor, ein erfindungsgemäßes Verfahren auszuführen, insbesondere das erfindungsgemäß vorgesehene Optimierungsverfahren auszuführen.

In möglicher Ausgestaltung des erfindungsgemäßen Systems ist der Solver ausgewählt aus der Gruppe mindestens umfassend: Quanten Annealer (DWave 5000Q Quantum Annealer, https://www.dwavesys.com/ oder Nachfolger), quanteninspirierter Annealer, insbesondere ein Digital Annealer (Fujitsu Digital Annealer Unit 2, https://www.fujitsu.com/de/themes/digitalannealer/ oder Nachfolger), DWave Hybrid Solver (auf dem DWave 5000Q).

Quanten Annealer werden von der in Kanada ansässigen Firma D-Wave Systems seit dem Jahr 2001 hergestellt. Ein Quanten Annealer ist eine Optimierungsmaschine. Die Anzahl der Qbits, die zur Programmierung verwendet werden können, verdoppelt sich alle zwei Jahre, wie in https://www.dwavesys.com/ beschrieben. Die aktuelle, über einen Cloud Service verfügbare Maschine hat eine Anzahl von 5000 Qbits. Aufgrund der geringen Vernetzung der Qbits lässt sich jedoch nur ein Bruchteil der verfügbaren Rechenkapazität nutzen, da viele Qbits zur Kopplung während der Implementierung eines Problems verwendet werden müssen. So lässt sich bei der Netzwerkoptimierung für QKD Systeme aber bspw. schon ein Problem mit 29 Netzwerkknoten und 48 Pfaden lösen.

Quantenhybride Verfahren lassen bereits heute die Lösung größerer Problemklassen zu. Dazu wird die quantentheoretische Beschreibung in kleinere Probleme geteilt und iteriert. Die reduzierten Optimierungsprobleme lassen sich sowohl klassisch als auch quantenmechanisch lösen. Das quanten-hybride Verfahren wird solange wiederholt bis eine Konvergenz des Optimierungsergebnisses erreicht wird.

Als Brückentechnologie dient derzeit ein klassischer ISIC der Firma Fujitsu, die Digital Annealer Unit (DAU). Die Digital Annealer Unit führt ein klassisches thermisches Annealing durch, ist aber in der Lage während der Sättigung des klassischen Algorithmus durch Injektion von zusätzlicher Temperatur den quantenmechanischen Tunneleffekt zu emulieren. Dazu wird dem System erlaubt, gegen Ende des klassischen Annealing Verfahrens sporadisch größere Änderungen durchzuführen als dies durch ein rein klassisches Verfahren erlaubt wäre. Während ein Quanten Annealer ein Minimum hinter einem Potentialberg erreichen kann, in dem eine Wahrscheinlichkeit besteht, durch den Berg hindurch "zu tunneln", erreicht der Digital Annealer dieses Ziel über die kurzzeitig höhere Temperatur, um somit "klassisch über den Potentialberg" zu gelangen (beschrieben bspw. in Quantum Annealing in the Transverse Ising Model, Tadashi Kadowaki and Hidetoshi Nishimori, Department of Physics, Tokyo Institute of Technology, Oh-okayama, Megro-ku, Tokyo 152-8551, Japan, February 1, 2008). In der Theorie erreichen beide Technologien ein tieferes Minimum und setzen sich damit von der rein klassischen Lösung des thermischen bzw. simulierten Annealing ab.

Ein weiterer Gegenstand der vorliegenden Erfindung ist ein quantenoptisches Netzwerk mit einer optimalen Anzahl von quantenoptischen Systemen für mindestens einen definierten Anwendungsfall, das durch Durchführung des hierin beschriebenen erfindungsgemäßen Verfahrens geplant ist bzw. wurde.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Schutzbereich der Erfindung wird durch die anhängenden Ansprüche definiert.

Die Erfindung ist anhand eines Ausführungsbeispiels in den Zeichnungen schematisch dargestellt und wird im Folgenden unter Bezugnahme auf die Zeichnungen ausführlich beschrieben:
Fig. 1 zeigt in schematischer Darstellung ein optisches Netzwerk, für welches eine Ausführungsform des erfindungsgemäßen Verfahrens ausgeführt wird.
Fig. 2 zeigt einen Verlauf einer Kostenfunktion in Abhängigkeit iterativ durchgeführter Schritte (d.h. iterativ variierter Lösungskandidaten) eines Simulated Annealing Verfahrens, das als Optimierungsverfahren bei einer Ausführungsform des erfindungsgemäßen Verfahrens gewählt wird.
Fig. 3 zeigt schematisch einen Verlauf einer Kostenfunktion in Abhängigkeit iterativ geänderter Lösungskandidaten bei Ablauf eines Simulated Annealing Verfahrens oder eines Quantum Annealing Verfahrens, die als Alternativen jeweils als Optimierungsverfahren bei Ausführungsformen des erfindungsgemäßen Verfahrens gewählt werden.
Fig. 4 zeigt innerhalb eines quantenoptischen Netzwerks gebildete Netzwerckreise, die zur Einbeziehung von Redundanzen ausgehend von einem MST zur Darstellung einer Planungsheuristik, wie sie gemäß einer weiteren Ausführungsform des erfindungsgemäßen Verfahrens bereitgestellt wird, gebildet werden.

Figur 1 zeigt in schematischer Darstellung ein Metronetzwerk, d.h. ein regionales optisches Netzwerk, für welches eine Ausführungsform des erfindungsgemäßen Verfahrens ausgeführt wird. Das Metronetzwerk 100 umfasst Netzwercknoten 110, die über jeweilige Netzwerkverbindungen 120 untereinander verbunden sind. Die geographischen Koordinaten der Netzwerkknoten 110 und die Netzwerkverbindungen 120, d.h. die Adjazenzen sind bekannt.

Die Größe des Lösungsraum des "QKD System Deployment Problems", d.h. die Menge an Lösungskandidaten, ist von der speziellen Netzwerktopologie abhängig.

Das betrachtete Netzwerk von 29 Netzwerkknoten und 48 Kanten, d.h. Netzwerkverbindungen eröffnet bereits 20! unterschiedliche Möglichkeiten der Bestückung mit QKD Systempaaren, wobei hierbei eine Redundanz noch nicht berücksichtigt ist. Die Komplexität des Problems wächst exponentiell mit der Anzahl der Kanten im Netzwerk. Daher werden klassische Computer in Schwierigkeiten kommen, ein kombinatorisches Problem dieser Größenordnung vollständig zu berechnen.

Quanten Annealer (https://www.dwavesys.com/) bzw. "quanteninspirierte Annealer" (https://www.fujitsu.com/de/themes/digitalannealer/) schaffen es unter Ausnutzung von quantenmechanischen Effekten, wie des Tunneleffekts, bzw. dessen Emulation, eine Lösung des Optimierungsproblems darzustellen.

Aufgrund der unterschiedlichen geographischen Abstände zwischen den Netzwerkknoten 110 wird für jede Netzwerkverbindung 120 eine unterschiedliche Schlüsselaustauschrate erreicht. Mit Hilfe der geographischen Koordinaten lässt sich für jede Netzwerkverbindung 120 eine maximale Schlüsselaustauschrate berechnen. Jeder Netzwerkknoten 110 kann als "Trusted Node" bezeichnet werden. Es besteht somit die Möglichkeit, eine direkte Verbindung, d.h. eine Netzwerkverbindung zwischen zwei entfernten Netzwerkknoten 111 und 116 anzulegen, wie durch die punkt-gestrichelte Linie dargestellt, sofern eine direkte Glasfaserverbindung zwischen den Netzwerkknoten 111 und 116 existiert. Eine direkte Verbindung zwischen den zwei Netzwerkknoten 111 und 116 als Endknoten der direkten Verbindung benötigt nur ein QKD Systempaar. Dabei wird allerdings, je nach dem geographischen Abstand zwischen den jeweilig zwei Netzwerkknoten 111 und 116 in der Regel nur eine vergleichsweise niedrige Schlüsselaustauschrate erreicht. Es besteht allerdings die Möglichkeit, den Schlüsselaustausch über einen oder mehrere zwischen den jeweilig zwei Endknoten 111, 116 liegende intermediäre Netzwerkknoten 112, 113, 114, 115 über ein Key Forwarding zu realisieren, wobei die einzelnen Abstände zwischen den an dem Schlüsselaustausch beteiligten Netzwerkknoten geringer sind als der Abstand zwischen den Endknoten 111, 116 und damit die erzielbare maximale Schlüsselaustauschrate letztlich erhöht wird. Allerdings werden bei der Realisierung des Key Forwarding mehr QKD Systempaare benötigt und damit die Kosten gesteigert. Es gilt nun, eine geeignete Konfiguration, d.h. eine geeignete, d.h. optimale, Anzahl an QKD Systemen, die paarweise jeweiligen Netzwerkverbindungen 120 einer Auswahl an Netzwerkverbindungen 120 zugeordnet sind, zu bestimmen, wobei die Netzwerkknoten bzw. die darauf verteilten und implementierten QKD Systeme auf den Netzwerkverbindungen der Auswahl an Netzwerkverbindungen über Quantenkanäle untereinander verbunden sind, wobei auf jedem Netzwerkknoten jeweils mindestens ein QKD System zu implementieren ist, so dass einerseits die Anzahl der zu implementierenden QKD Systeme bzw. der zu implementierenden QKD Systempaare möglichst gering ist, andererseits aber auch die darüber erzielbare maximale Schlüsselaustauschrate zwischen den Netzwerkknoten über die Anzahl der darauf implementierten QKD Systeme und die Auswahl der Netzwerkverbindungen einem zu verschlüsselnden und zwischen jeweiligen Netzwerkknoten zu übertragenden Datenvolumen gerecht wird. Dazu wird eine Kostenfunktion erstellt und mittels eines geeigneten Optimierungsverfahrens deren globales Minimum zumindest näherungsweise bestimmt. Neben der Anzahl der QKD Systeme und der je nach Anwendungsfall erforderlichen maximalen Schlüsselaustauschraten können noch andere Bezugsgrößen oder Bedingungen, wie insbesondere eine vorzusehende Redundanz, d.h. eine Ausfallsicherheit, in der Kostenfunktion berücksichtigt werden.

In dem in Figur 1 gezeigten Beispiel ist eine QKD Trusted Node Kette, umfassend die Netzwerkknoten 111, 112, 113, 114, 115, 116, von einem zentralen Netzwerkknoten 111 zu einem entfernten Netzwerkknoten 116 dargestellt. Über die QKD Trusted Node Kette, d.h. über die Netzwerkknoten 111, 112, 113, 114, 115, 116 bzw. über die jeweils darauf verteilten und implementierten QKD Systeme, hier dargestellt durch jeweilige Kuben 130, und sie verbindende durch dünn gestrichelte Linien dargestellte Quantenkanäle werden kryptographische Schlüssel quantensicher zwischen dem Netzwerkknoten 111 und dem Netzwerkknoten 116 ausgetauscht. Der eigentliche Datenverkehr zwischen den Netzwerkknoten 111 und 116 wird mit den über die QKD Trusted Node Kette bzw. über die zu bestimmende Auswahl an Netzwerkverbindungen ausgetauschten QKD Schlüsseln symmetrisch verschlüsselt und über beliebige, nicht von der QKD Installation abhängige Routen transferiert, wie hier durch gepunktete Linien angedeutet. Die auf den Netzwerkknoten 111, 112, 113, 114, 115, 116 verteilten und implementierten QKD Systeme 130, die zusammen mit den auf den die Netzwerkknoten 111 - 116 verbindenden Netzwerkverbindungen implementierten Quantenkanäle die QKD Trusted Node Kette bilden, stellen hier die gesuchte Lösung bzw. Konfiguration dar, so dass die Anzahl der QKD Systeme, hier dargestellt durch Kuben 130, als optimale Anzahl der QKD Systeme und die Anzahl der sie verbindenden Quantenkanäle, hier durch jeweilige gestrichelte Linien dargestellt, jeweils minimal ist. In dem hier gezeigten Beispiel ist jeder Netzwerkverbindung 120 der QKD Trusted Node Kette ein QKD Systempaar zugeordnet, wobei ein jeweiliges QKD Systempaar hier durch zwei Kuben 130 dargestellt ist, wobei einer der zwei Kuben 130 auf dem jeweiligen Netzwerkknoten an einem Ende der jeweiligen Netzwerkverbindung implementiert ist und der andere der zwei Kuben 130 auf dem jeweiligen Netzwerkknoten an dem entsprechend anderen Ende der jeweiligen Netzwerkverbindung implementiert ist. Folglich sind auf den ein jeweiliges Ende der QKD Trusted Node Kette bildenden Netzwerkknoten 111 und 116 jeweils nur ein QKD System implementiert während auf den innenliegenden Netzwerkknoten 112, 113, 114 und 115 jeweils zwei QKD Systeme implementiert sind. Generell ist es auch möglich, dass je nach zu verschlüsselndem Datenverkehr, einer Netzwerkverbindung mehrere QKD Systempaare zuzuordnen und entsprechend mehrere QKD Systeme auf den jeweiligen durch die Netzwerkverbindung verbundenen Netzwerkknoten zu implementieren sind. Gehen von einem Netzwerkknoten mehrere Netzwerkverbindungen zu entsprechend mehreren benachbarten Netzwerkknoten, so ist es möglich, dass zumindest einem Teil der mehreren Netzwerkverbindungen jeweils ein QKD System auf dem Netzwerkknoten zugeordnet ist und demnach auf dem Netzwerkknoten entsprechend mehrere QKD Systeme implementiert sind. Die Lösung, d.h. die Konfiguration mit der optimalen Anzahl auf den Netzwerkknoten verteilten und implementierten QKD Systemen und mit der Auswahl der die Netzwerkknoten verbindenden und jeweilig mindestens einem quantenoptischen Systempaar zugeordneten Netzwerkverbindungen und der auf den Netzwerkverbindungen vorgesehenen Quantenkanäle soll resistent gegen einen Ausfall eines Quantenkanals sein. Das sich so stellende Optimierungsproblem, nämlich das Auffinden einer optimalen Lösung (globales Extremum, i.d.R. globales Minimum) der Kostenfunktion, wird erfindungsgemäß durch ein geeignetes Optimierungsverfahren gelöst.

Figur 2 zeigt einen Verlauf einer Kostenfunktion 200 in Abhängigkeit iterativ durchgeführter Schritte (d.h. iterativ variierter Konfigurationen bzw. Lösungskandidaten) eines Simulated Annealing Verfahrens, das als Optimierungsverfahren bei einer Ausführungsform des erfindungsgemäßen Verfahrens gewählt wird.

Darstellt ist die Kostenfunktion 200 eines Simulated Annealing Verfahrens, hier exemplarisch dargestellt als "Gewicht" und aufgetragen entlang einer Ordinate 210, als Funktion der Annealing Schritte, d.h. der iterativ variierten Konfigurationen, aufgetragen entlang einer Abszisse 220. Mit jeder Iteration wird die Konfiguration, d.h. die Anzahl der auf den Netzwerkknoten des optischen Netzes zu implementierenden quantenoptischen Systeme, bspw. der QKD Systeme und die Gruppe der die Netzwerkknoten verbindenden und jeweilig mindestens einem quantenoptischen Systempaar zugeordneten Netzwerkverbindungen, auf denen Quantenkanäle vorzusehen sind, variiert, was zuerst eine deutliche Verschlechterung der Situation, d.h. eine Erhöhung des Werts der Kostenfunktion 200 erbringt, die sich allerdings im Laufe des Verfahrens deutlich verbessert, d.h. zu niedrigen Werten der Kostenfunktion 200 führt. Im Zuge des Simulated Annealing wird jeder Lösungskandidat, d.h. jede Konfiguration, einer Beurteilung durch die Kostenfunktion unterworfen. Bedeutet die Variation niedrigere Ausbaukosten bei besserer Netzwerkkonfiguration, d.h. ein geringerer Wert der Kostenfunktion, so wird die Variation besser bewertet als in der Situation zuvor. Wird kein besserer Wert durch Variation gefunden, so besteht auch die Möglichkeit ein schlechteres Ergebnis zu akzeptieren. Dieser Fall wird über eine temperaturabhängige Boltzmann Wahrscheinlichkeitsverteilung bewertet, d.h. die Wahrscheinlichkeit einer Verschlechterung hängt von einem Temperaturwert des Algorithmus ab.

Die Temperatur des Systems kühlt sich während der Laufzeit des Algorithmus ab, so dass beschriebene temporäre Verschlechterungen während der Laufzeit des Algorithmus immer unwahrscheinlicher werden. Somit konvergiert der Algorithmus durch den Temperaturwert. Alternativ kann er durch ein Abbruchkriterium beendet werden. Figur 2 zeigt die Entwicklung der Kostenfunktion des Simulated Annealing Verfahrens.

Das Simulated Annealing Verfahren ist ein stochastisches Suchverfahren zur näherungsweisen Lösung eines Optimierungsproblems. Das Optimierungsproblem wird durch die Kostenfunktion repräsentiert, wobei es Ziel des Simulated Annealing Verfahrens ist, ein möglichst tiefes Tal zu finden, d.h. zumindest näherungsweise das globale Minimum zu finden.

Ausgehend von einem zufälligen Startpunkt bzw. Startgewicht bzw. Start-Konfiguration untersucht Simulated Annealing zufällig gewählte Lösungskandidaten in der Nachbarschaft des aktuellen Lösungskandidaten. In der Kostenlandschaft wird generell der abwärtsführende Weg genommen. Führt der Weg ausgehend von dem aktuellen Lösungskandidaten zu dem variierten Lösungskandidaten bergauf, so wird der variierte Lösungskandidat trotzdem als neuer Lösungskandidat akzeptiert, allerdings nur mit einer gewissen Wahrscheinlichkeit, der sogenannten Akzeptanzwahrscheinlichkeit. Durch diese Fähigkeit, Verschlechterungen zu akzeptieren, kann das Verfahren lokale Täler, d.h. lokale Minima, verlassen und zum globalen Minimum, hier bezeichnet als optimiertes Gewicht, vorstoßen, wie in Figur 2 angedeutet ist. In der Regel werden mehrere Iterationen, d.h. Runs (Durchläufe) des Simulated Annealing durchgeführt, wobei jeder Run einen anderen stochastisch gewählten Startpunkt hat, um letztendlich den Lösungsraum so gut wie möglich abtasten zu können.

Figur 3 zeigt schematisch einen jeweiligen Wert ("Kosten") einer Kostenfunktion 300, aufgetragen entlang einer Ordinate 310, in Abhängigkeit einer iterativ geänderten Konfiguration, d.h. insbesondere einer iterativ geänderten Anzahl an auf die Netzwerkknoten paarweise verteilten und implementierten quantenoptischen Systemen und/oder Gruppe an die Netzwerkknoten verbindenden und jeweilig mindestens einem quantenoptischen Systempaar zugeordneten Netzwerkverbindungen, aufgetragen entlang einer Abszisse 320, bei Ablauf eines Simulated Annealing Verfahrens oder eines Quantum Annealing Verfahrens. Während Simulated Annealing thermale Sprünge 330 zur Überwindung von lokalen Maxima 350 verwendet, nutzt Quantum Annealing das Quantentunneln 340, um niedrigere bzw. kostengünstigere Lösungen, d.h. Konfigurationen zu finden.

Ein "quantenbasierter Ansatz" basiert auf einer Klasse von Algorithmen, die für den Einsatz auf Quantencomputern konzipiert, aber auf herkömmlicher Hardware auflösungsfähig sind. Es ist aufgrund bestimmter Parallelisierungsfunktionen in den Quantenalgorithmen möglich, auch bei Verwendung von Rechnern, die keine Quantencomputer sind, Vorteile sowohl bei der Auflösungsqualität als auch bei der Berechnungsleistung zu erzielen. Ein Beispiel dafür ist der Quadratic Unconstrained Binary Optimization-(QUBO-)Algorithmus, der ein kombinatorisches Optimierungsproblem so formuliert, dass es mit einem Quantencomputer lösbar wird.

Quantenglühen, d.h. Quantum Annealing kann mit simuliertem Glühen, d.h. Simulated Annealing verglichen werden, dessen Parameter "Temperatur" eine ähnliche Rolle spielt wie die Tunnelfeldstärke des Quantum Annealing. Beim simulierten Glühen bestimmt die Temperatur die Wahrscheinlichkeit, von einem einzelnen aktuellen Zustand in einen Zustand höherer "Energie" zu gelangen. Beim Quantenglühen bestimmt die Stärke des Transversalfeldes die quantenmechanische Wahrscheinlichkeit, die Amplituden aller Zustände parallel zu ändern.

Unter den verschiedenen Methoden des Quantencomputings, die es heute auf dem Markt gibt, wird der Digital Annealer als ein Beispiel für das Annealing-Verfahren klassifiziert, das sich auf die Lösung kombinatorischer Optimierungsprobleme und die Erzielung erfolgreicher Ergebnisse durch eine schnelle operative Leistung konzentriert. Im Gegensatz zu herkömmlichen Computern erfordert Digital Annealing keinerlei Programmierung. Stattdessen können durch einfaches Festlegen von Parametern Berechnungen durchgeführt werden.

Der Ansatz über QUBO Modellierung schafft auch eine Hardware- und Herstellerunabhängigkeit, weil alle derzeit verfügbaren Annealer diese Problemformulierung als Eingabe erwarten.

Als weiterer Vorteil gilt die Energieeffizienz der Lösung. So verbrauchen Quanten Annealer bis auf die Kühlleistung minimale Energie für die Berechnung. Auch der Digital Annealer mit seinem PCI Formfaktor stellt eine zur Rechenleistung effiziente Methode der Berechnung dar.

Figur 4 zeigt beispielhaft die Anwendung der erfindungsgemäß bereitgestellten Planungsheuristik auf einem quantenoptischen Netzwerk 400. Eingezeichnet ist ein berechneter MST 430, ausgehend von einem zentralen Netzwerkknoten, der das Optimierungsproblem ohne Redundanz löst. Erfindungsgemäß werden nun innerhalb des quantenoptischen Netzwerks 400 Netzwerkkreise 401, 402, 403 zur Einbeziehung von Redundanzen ausgehend von dem MST 430, aufgespannt durch Netzwerkknoten 410 und durch Netzwerkverbindungen 420, zur Darstellung einer Planungsheuristik für das quantenoptische Netzwerk 400 gebildet. Durch die gebildeten Netzwerkkreise 401, 402 und 403, deren Verlauf in dem gezeigten Beispiel jeweils durch gestrichelte Linien dargestellt ist, werden Blätter des MST 430, die zuvor jeweils ein "offenes" Ende in Form eines abschließenden Netzwerkknotens 410 hatten, zu einem jeweiligen Netzwerkkreis verbunden, wobei neue Verbindungen im quantenoptischen Netzwerk 400 entlang der Netzwerkkreise 401, 402, 403 eingefügt werden. Diese Verbindungen waren nicht Teil des ursprünglichen MST 430, sondern es werden bestehende Adjazenzen ausgewählt, die sich zu den gezeigten Kreisen 401, 402 bzw. 403 ergänzen. Das bedeutet, dass zur Darstellung einer erfindungsgemäß vorgesehenen Planungsheuristik für ein quantenoptisches Netzwerk 400 in einem ersten Schritt ein MST 430 berechnet wird, und in einem zweiten Schritt Netzwerckreise bzw. kreisförmige Pfade 401, 402 und 403 entlang bestehender Adjazenzen zur Schaffung von Redundanz erzeugt werden.

### Bezugszeichenliste

- 100: Netzwerk
- 110: Netzwerkknoten
- 111-116: Netzwerkknoten
- 120: Netzwerkverbindung
- 130: QKD System

- 200: Kostenfunktion
- 210: Ordinate
- 220: Abszisse

- 300: Kostenfunktion
- 310: Ordinate
- 320: Abszisse
- 330: thermaler Sprung
- 340: Quantentunneln
- 350: lokales Maximum

- 400: quantenoptisches Netzwerk
- 401-403: Netzwerkkreise
- 410: Netzwerkknoten
- 420: Netzwerkverbindungen
- 430: MST

## Patentansprüche

1. Verfahren zur Planung eines quantenoptischen Netzwerks mit einer optimalen Anzahl von quantenoptischen Systemen (130) für mindestens einen definierten Anwendungsfall, wobei die optimale Anzahl der quantenoptischen Systeme (130) auf Netzwerkknoten (110, 111-116, 410) eines Telekommunikationsnetzes verteilt und implementiert wird und die quantenoptischen Systeme (130) paarweise jeweils einer jeweiligen Netzwerkverbindung einer Auswahl von die jeweiligen Netzwerkknoten (110, 111-116, 410) verbindenden Netzwerkverbindungen (120, 420) operativ zugeordnet werden, wobei die paarweise zugeordneten quantenoptischen Systeme (130) über Quantenkanäle auf den ihnen jeweils zugeordneten Netzwerkverbindungen miteinander verbunden werden, wobei die optimale Anzahl der quantenoptischen Systeme (130) und die Auswahl der Netzwerkverbindungen (120, 420) bestimmt wird, indem ein auf einem Prozessor gespeicherter und implementierter Solver für eine Kostenfunktion (200, 300) als Funktion mindestens der Anzahl der quantenoptischen Systeme (130) als erster Bezugsgröße ein globales Minimum mit einem Optimierungsverfahren bestimmt.

2. Verfahren nach Anspruch 1, bei dem das Telekommunikationsnetz ein optisches Netz umfasst, wobei die optimale Anzahl der quantenoptischen Systeme auf Netzwerkknoten (110, 111-116, 410) des optischen Netzes paarweise verteilt und implementiert wird.

3. Verfahren nach einem der voranstehenden Ansprüche, bei dem der mindestens eine Anwendungsfall als ein quantensicherer Zertifikatsaustausch in dem Telekommunikationsnetz gewählt wird.

4. Verfahren nach einem der Ansprüche 1 oder 2, das für eine quantensichere Verschlüsselung von zu verschlüsselnden Verkehren, die über eine Verkehrsmatrix vorgegeben werden, unter allen Netzwerkknoten (110, 111-116, 410) des Telekommunikationsnetzes als definiertem Anwendungsfall durchgeführt wird.

5. Verfahren nach einem der voranstehenden Ansprüche, bei dem das globale Minimum der Kostenfunktion (200, 300) bestimmt wird auf Basis eines Optimierungsverfahrens gewählt aus der Gruppe mindestens umfassend Monte Carlo Verfahren und Quantum Annealing Verfahren.

6. Verfahren nach einem der voranstehenden Ansprüche, bei dem die quantenoptischen Systeme (130) als QKD Systeme gewählt werden, wobei ein jeweiliges QKD Systempaar, bestehend aus einem ersten QKD System und einem zweiten QKD System, auf zwei über eine dem jeweiligen QKD Systempaar operativ zugeordnete Netzwerkverbindung verbundene Netzwerkknoten verteilt und implementiert wird und das erste QKD System über mindestens einen Quantenkanal auf der Netzwerkverbindung mit dem zweiten QKD System verbunden wird.

7. Verfahren nach Anspruch 6, bei dem die Kostenfunktion (200, 300) als mindestens eine weitere Bezugsgröße mindestens umfasst: Schlüsselaustauschraten an den Netzwerkknoten (110, 111-116, 410) über die jeweiligen Netzwerkknoten (110, 111-116, 410) verbindende Pfade, wobei einem jeweiligen Pfad ein oder mehrere jeweils zwei Netzwerkknoten mit einem darauf verteilten und implementierten QKD Systempaar verbindende Quantenkanäle zugeordnet werden, wobei die erste Bezugsgröße und jede weitere Bezugsgröße jeweils in einem mit einem jeweils definierten Wichtungsparameter versehenden Term in der Kostenfunktion (200, 300) berücksichtigt wird, wobei die Terme aufsummiert werden.

8. Verfahren nach einem der voranstehenden Ansprüche, bei dem die Kostenfunktion (200, 300) als Nebenbedingung umfasst, dass alle Netzwercknoten (110, 111-116, 410) des Telekommunikationsnetzes über jeweilige einen oder mehrere Quantenkanäle umfassende Pfade miteinander verbunden sein müssen.

9. Verfahren nach einem der voranstehenden Ansprüche, bei dem für einen jeweiligen definierten Anwendungsfall unter Einbeziehung von Redundanz eine jeweilige Planungsheuristik zur Planung des quantenoptischen Netzwerks (400) erstellt wird, wobei ein an den jeweiligen Anwendungsfall angepasster Minimum Spanning Tree, MST, (430) berechnet und Blätter des an den jeweiligen Anwendungsfall angepassten Minimum Spanning Tree (430) in Form von Netzwerkkreisen (401, 402, 403) verbunden werden.

10. System zur Planung eines quantenoptischen Netzwerks mit einer optimalen Anzahl von quantenoptischen Systemen (130) für mindestens einen definierten Anwendungsfall, wobei die optimale Anzahl der quantenoptischen Systeme (130) auf Netzwerkknoten (110, 111-116, 410) eines Telekommunikationsnetzes zu verteilen und zu implementieren ist, wobei das System mindestens einen Prozessor umfasst, auf dem mindestens ein Solver gespeichert und implementiert ist, der dazu konfiguriert ist, bei Ablauf auf dem mindestens einen Prozessor, ein Verfahren nach einem der voranstehenden Ansprüche auszuführen.

11. System nach Anspruch 10, bei dem der Solver ausgewählt ist aus der Gruppe mindestens umfassend: Quanten Annealer, quanteninspirierter Annealer, Digital Annealer, DWave Hybrid Solver.

12. Quantenoptisches Netzwerk mit einer optimalen Anzahl von quantenoptischen Systemen (130) für mindestens einen definierten Anwendungsfall, wobei die optimale Anzahl der quantenoptischen Systeme (130) auf Netzwerkknoten (110, 111-116, 410) eines Telekommunikationsnetzes verteilt und implementiert ist und die quantenoptischen Systeme (130) paarweise jeweils einer jeweiligen Netzwerkverbindung einer Auswahl von die jeweiligen Netzwerkknoten (110, 111-116, 410) verbindenden Netzwerkverbindungen (120, 420) operativ zugeordnet sind, wobei die paarweise zugeordneten quantenoptischen Systeme (130) über Quantenkanäle auf den ihnen jeweils zugeordneten Netzwerkverbindungen miteinander verbunden sind, wobei die optimale Anzahl der quantenoptischen Systeme (130) und die Auswahl der Netzwerkverbindungen (120, 420) durch Durchführung eines Verfahrens nach einem der Ansprüche 1 bis 9 bestimmt ist.

## Claims

1. A method for planning a quantum optical network with an optimal number of quantum optical systems (130) for at least one defined use case, wherein the optimum number of quantum optical systems (130) is distributed and implemented on network nodes (110, 111-116, 410) of a telecommunication network and the quantum optical systems (130) are operatively assigned in pairs to a respective network connection of a selection of network connections (120, 420) connecting the respective network nodes (110, 111-116, 410), wherein the quantum optical systems (130) assigned in pairs are interconnected via quantum channels on the network connections respectively assigned to them, wherein the optimal number of quantum optical systems (130) and the selection of network connections (120, 420) are determined by using a solver, stored and implemented on a processor, which solver determines a global minimum for a cost function (200, 300) using an optimization method, the cost function being dependent at least on the number of quantum optical systems (130) as a first reference parameter.

2. The method according to claim 1, in which the telecommunication network comprises an optical network, wherein the optimal number of quantum optical systems is distributed and implemented in pairs on network nodes (110, 111-116, 410) of the optical network.

3. The method according to either of the preceding claims, in which the at least one use case is selected as a quantum secure certificate exchange in the telecommunication network.

4. The method according to either of claims 1 or 2, which is executed, as the defined use case, for a quantum secure encryption of communications to be encrypted, which are specified via a traffic matrix among all network nodes (110, 111-116, 410) of the telecommunication network.

5. The method according to any of the preceding claims, in which the global minimum of the cost function (200, 300) is determined on the basis of an optimization method selected from the group comprising at least Monte Carlo methods and quantum annealing methods.

6. The method according to any of the preceding claims, in which the quantum optical systems (130) are selected as QKD systems, wherein a respective QKD system pair, consisting of a first QKD system and a second QKD system, is distributed and implemented on two network nodes connected via a network connection operatively assigned to the respective QKD system pair, and the first QKD system is connected to the second QKD system via at least one quantum channel on the network connection.

7. The method according to claim 6, in which the cost function (200, 300) comprises as at least one further reference variable at least: key exchange rates at the network nodes (110, 111 -116, 410) via paths connecting the respective network nodes (110, 111-116, 410), wherein one or multiple quantum channels respectively connecting two network nodes with a QKD system pair distributed and implemented thereon are assigned to a respective path, wherein the first reference variable and each further reference variable is respectively taken into account in a term in the cost function (200, 300), the term being provided with a respectively defined weighting parameter, wherein the terms are summed.

8. The method according to any of the preceding claims, in which the cost function (200, 300) comprises as a secondary condition that all network nodes (110, 111-116, 410) of the telecommunication network must be interconnected via respective paths comprising one or multiple quantum channels.

9. The method according to any of the preceding claims, in which a respective planning heuristic for planning the quantum optical network (400) is created for a respective defined use case, including redundancy, wherein a minimum spanning tree, MST, (430) adapted to the respective use case is calculated and leaves of the minimum spanning tree (430) adapted to the respective use case are connected in the form of network circuits (401, 402, 403).

10. A system for planning a quantum optical network with an optimal number of quantum optical systems (130) for at least one defined use case, wherein the optimal number of quantum optical systems (130) is to be distributed and implemented on network nodes (110, 111-116, 410) of a telecommunication network, wherein the system comprises at least one processor on which at least one solver is stored and implemented, which is configured to execute a method according to any of the preceding claims when running on the at least one processor.

11. The system according to claim 10, in which the solver is selected from the group comprising at least: Quantum annealer, quantum-inspired annealer, digital annealer, DWave hybrid solver.

12. A quantum optical network with an optimal number of quantum optical systems (130) for at least one defined use case, wherein the optimum number of quantum optical systems (130) is distributed and implemented on network nodes (110, 111-116, 410) of a telecommunication network and the quantum optical systems (130) are operatively assigned in pairs to a respective network connection of a selection of network connections (120, 420) connecting the respective network nodes (110, 111-116, 410), wherein the quantum optical systems (130) assigned in pairs are interconnected via quantum channels on the network connections respectively assigned to them, wherein the optimal number of the quantum optical systems (130) and the selection of the network connections (120, 420) is determined by executing a method according to any of claims 1 to 9.

## Revendications

1. Procédé de planification d'un réseau optique quantique doté d'un nombre optimal de systèmes optiques quantiques (130) pour au moins un cas d'utilisation défini, le nombre optimal des systèmes optiques quantiques (130) étant réparti et mis en œuvre sur des nœuds de réseau (110, 111-116, 410) d'un réseau de télécommunications et les systèmes optiques quantiques (130) étant attribués de manière opérationnelle par paires respectivement à une liaison de réseau respective d'une sélection de liaisons de réseau (120, 420) reliant des nœuds de réseau (110, 111-116, 410) respectifs, les systèmes optiques quantiques (130) attribués par paires étant reliés entre eux par des canaux quantiques sur les liaisons de réseau qui leur sont respectivement attribuées, le nombre optimal des systèmes optiques quantiques (130) et la sélection des liaisons de réseau (120, 420) étant déterminés au moyen d'un solveur stocké et mis en œuvre sur un processeur qui, par un procédé d'optimisation, détermine un minimum global pour une fonction de coût (200, 300) en fonction d'au moins le nombre des systèmes optiques quantiques (130) en tant qu'une première valeur de référence.

2. Procédé selon la revendication 1, dans lequel le réseau de télécommunications comprend un réseau optique, le nombre optimal des systèmes optiques quantiques étant réparti et mis en œuvre par paires sur des nœuds de réseau (110, 111-116, 410) du réseau optique.

3. Procédé selon l'une des revendications précédentes, dans lequel ledit au moins un cas d'utilisation est choisi en tant qu'un échange de certificats à sécurité quantique dans le réseau de télécommunications.

4. Procédé selon l'une des revendications 1 ou 2, mis en œuvre pour un chiffrement à sécurité quantique de trafics à chiffrer, prédéfinis par une matrice de trafic, parmi tous les nœuds de réseau (110, 111-116, 410) du réseau de télécommunications en tant que cas d'utilisation défini.

5. Procédé selon l'une des revendications précédentes, dans lequel le minimum global de la fonction de coût (200, 300) est déterminé sur la base d'un procédé d'optimisation choisi dans le groupe comprenant au moins des méthodes de Monte Carlo et des méthodes de Quantum Annealing.

6. Procédé selon l'une des revendications précédentes, dans lequel les systèmes optiques quantiques (130) sont choisis en tant que systèmes QKD, une paire respective de systèmes QKD, composée d'un premier système QKD et d'un second système QKD, étant répartie et mise en œuvre sur deux nœuds de réseau reliés par une liaison de réseau attribuée de manière opérationnelle à la paire respective de systèmes QKD, et le premier système QKD étant relié au second système QKD par au moins un canal quantique sur la liaison de réseau.

7. Procédé selon la revendication 6, dans lequel la fonction de coût (200, 300) comprend au moins en tant qu'au moins une autre valeur de référence : des taux d'échange de clés au niveau des nœuds de réseau (110, 111-116, 410) par l'intermédiaire de chemins reliant les nœuds de réseau (110, 111-116, 410) respectifs, un ou plusieurs canaux quantiques reliant respectivement deux nœuds de réseau avec une paire de systèmes QKD répartis et mis en œuvre sur ceux-ci étant attribués à un chemin respectif, la première valeur de référence et chaque autre valeur de référence étant respectivement prises en compte dans un terme doté d'un paramètre de pondération défini respectivement dans la fonction de coût (200, 300), les termes étant additionnés.

8. Procédé selon l'une des revendications précédentes, dans lequel la fonction de coût (200, 300) comprend la condition secondaire que tous les nœuds de réseau (110, 111-116, 410) du réseau de télécommunications doivent être interconnectés par des chemins respectifs comprenant un ou plusieurs canaux quantiques.

9. Procédé selon l'une des revendications précédentes, dans lequel, pour un cas d'utilisation défini respectif, une heuristique de planification respective est établie pour la planification du réseau optique quantique (400) en incluant une redondance, un Minimum Spanning Tree (MST) (430) adapté au cas d'utilisation respectif étant calculé et des feuilles du Minimum Spanning Tree (430) adapté au cas d'utilisation respectif étant reliées sous la forme de circuits de réseau (401, 402, 403).

10. Système de planification d'un réseau optique quantique doté d'un nombre optimal de systèmes optiques quantiques (130) pour au moins un cas d'utilisation défini, le nombre optimal des systèmes optiques quantiques (130) devant être réparti et mis en œuvre sur des nœuds de réseau (110, 111-116, 410) d'un réseau de télécommunications, le système comprenant au moins un processeur sur lequel est stocké et mis en œuvre au moins un solveur qui est configuré pour exécuter un procédé selon l'une des revendications précédentes lors de l'exécution sur le au moins un processeur.

11. Système selon la revendication 10, dans lequel le solveur est choisi dans le groupe comprenant au moins : le Quantum Annealer, l'Annealer d'inspiration quantique, le Digital Annealer, le solveur hybride de D-Wave.

12. Réseau optique quantique doté d'un nombre optimal de systèmes optiques quantiques (130) pour au moins un cas d'utilisation défini, le nombre optimal des systèmes optiques quantiques (130) étant réparti et mis en œuvre sur des nœuds de réseau (110, 111-116, 410) d'un réseau de télécommunications et les systèmes optiques quantiques (130) étant attribués de manière opérationnelle par paires respectivement à une liaison de réseau respective d'une sélection de liaisons de réseau (120, 420) reliant les nœuds de réseau (110, 111-116, 410) respectifs, les systèmes optiques quantiques (130) attribués par paires étant reliés entre eux par des canaux quantiques sur les liaisons de réseau qui leur sont respectivement attribuées, le nombre optimal des systèmes optiques quantiques (130) et la sélection des liaisons de réseau (120, 420) étant déterminés par la mise en œuvre d'un procédé selon l'une des revendications 1 à 9.
